# EUROPÄISCHE PATENTSCHRIFT

(11) **EP 2 141 110 B1**
(45) Veröffentlichungstag und Bekanntmachung des Hinweises auf die Patenterteilung: **19.10.2011**
(21) Anmeldenummer: 09173749.4
(22) Anmeldetag: 06.08.2007
(51) Int. Cl.: B66B 7/06, F16G 5/06, D07B 1/22, B29D 29/10

(54) **Aufzugsanlage mit einem Riemen, Riemen für eine solche Aufzugsanlage, Verbund aus solchen Riemen sowie Verfahren zur Montage eines solchen Verbunds in einer Aufzugsanlage**
Lift load-bearing mechanism for a lift system, lift system with such a lift load-bearing mechanism and method for assembly of such a lift system
Moyen de support d'élévation pour un système d'élévation, système d'élévation doté d'un tel moyen d'élévation et procédé de montage d'un tel système d'élévation

(30) Priorität: 11.08.2006 EP 06118824
(43) Veröffentlichungstag der Anmeldung: 06.01.2010
(62) Teilanmeldung aus: 07113880.4
(73) Patentinhaber: Inventio AG, 6052 Hergiswil NW (CH)
(72) Erfinder: Ach, Ernst, 6030 Ebikon (CH); Bonnard, Luc, 6052 Hergiswil (CH)

(56) Entgegenhaltungen:
- EP-A2- 0 005 076
- EP-A2- 1 396 458
- EP-A2- 1 547 960
- WO-A1-01/75330
- DE-A1- 2 538 691
- DE-A1- 19 851 761
- DE-B- 1 039 795
- DE-C- 438 102

## Beschreibung

Die vorliegende Erfindung betrifft eine Aufzugsanlage mit einem Riemen, einen Riemen für eine solche Aufzuganlage, einen Verbund aus solchen Riemen sowie ein Verfahren zur Montage eines solchen Verbunds in einer Aufzugsanlage.

Eine Aufzugsanlage umfasst eine Aufzugskabine und in der Regel ein Gegengewicht, die in einem Aufzugsschacht oder entlang freistehender Führungsschienen bewegbar sind. Zum Erzeugen der Bewegung weist die Aufzugsanlage mindestens einen Antrieb mit mindestens je einer Treibscheibe bzw. Treibwelle auf, die über einen oder mehrere Riemen die Aufzugskabine und das Gegengewicht tragen und/oder die erforderlichen Antriebskräfte auf diese übertragen.

Dabei können die Aufzugkabine und das Gegengewicht über den- bzw. dieselben Riemen mit dem Antrieb verbunden sein. Alternativ können die Aufzugkabine und das Gegengewicht auch jeweils über separate Riemen mit dem Antrieb derart gekoppelt sein, dass sich das Gegengewicht hebt, wenn die Aufzugkabine abgesenkt wird und umgekehrt. Während die Treibscheibe bzw. Treibwelle Zugkräfte auf die Antriebsriemen ausübt, um die Aufzugkabine bzw. das Gegengewicht anzuheben, werden reine Tragriemen lediglich über Umlenkelemente, insbesondere Umlenkrollen umgelenkt und nehmen einen konstanten Teil der Gewichtskraft der Aufzugkabine und des Gegengewichts auf. Bevorzugt sind Antriebs- und Tragriemen jedoch identisch.

Ein Riemen nach der vorliegenden Erfindung kann für jede der oben beschriebenen Funktionen eingesetzt werden, also sowohl als Antriebs- als auch als Tragriemen, als einer von mehreren Riemen und/oder als Riemen, der an der Aufzugkabine und/oder dem Gegengewicht befestigt ist. Dementsprechend werden Treibscheiben bzw. Treibwellen und Umlenkrollen im Folgenden allgemein als Riemenräder bezeichnet.

Solche Riemen für Aufzuganlagen umfassen üblicherweise einen Riemenkörper aus Elastomeren, beispielsweise Polyurethan ("PU") oder Ethylen-Propylen-Dien-Kautschuk ("EPDM"). Um die Zugkräfte zu übertragen, sind in dem Riemenkörper Zugträgern in Form von Stahl- und/oder Kunststoff-Corden eingebettet. Die Corde können als Einfachdrähte ausgebildet oder bevorzugt aus ein- oder mehrfach verseilten Drähten aufgebaut sein. Sie sind vorteilhaft in der neutralen Faser des Riemenquerschnitts angeordnet, in der bei einer Umschlingung eines Riemenrads keine Zug- oder Druckspannungen auftreten.

Herkömmlicherweise werden in Aufzuganlagen Flachriemen eingesetzt, im einzelnen Riemen, deren Breite w parallel zur Riemenradachse deutlich grösser ist als ihre Höhe t in radialer Richtung des Riemenrads. Solche Flachriemen weisen aufgrund ihrer geringen Höhe ein kleines Flächenträgheitsmoment um ihre Querachse und gleichzeitig aufgrund ihrer grossen Breite ein grosses Flächenträgheitsmoment um ihre Längs- und Hochachse auf. Sie sind damit vorteilhaft sehr elastisch bezüglich ihrer Querachse, jedoch gleichzeitig sehr steif um ihre Längs- und Hochachse. Damit lassen sie sich einerseits gut um Riemenräder schlingen und verdrillen bzw. verbiegen sich andererseits in den freien Trumabschnitten nur geringfügig. Auch die Anordnung der Zugträger nebeneinander in der neutralen Faser führt zu einer im Verhältnis zur Höhe grossen Breite des Riemens.

Die WO 2006/000500 A1 schlägt dementsprechend einen Flachriemen für Aufzuganlagen vor, der aus einem ersten, und einem damit verbundenen zweiten, jeweils aus PU extrudierten Teilriemen aufgebaut ist, wobei Zugträger in der neutralen Biegeebene des Flachriemens angeordnet sind.

Zur Erhöhung des Anpressdruckes an das Riemenrad und damit der Traktions- bzw. Treibfähigkeit bei gleicher Radialkraft und damit gleicher Lagerbelastung und Riemenspannung ist es aus der EP 1 555 234 B1 bekannt, den flachriemenartigen Riemenkörper mit Keilrippen zu versehen, die mit weitgehend komplementär geformten Rillen auf der Lauffläche des Riemenrads zusammenwirken. Insbesondere liegen die schrägen Flanken der Keilrippen an ebenso schrägen Flanken des Riemenrads an. Gleichzeitig führen die Keilrippen den Riemen vorteilhaft in Querrichtung auf dem Riemenrad.

Weitere Riemen für Aufzugsanlagen sind in dem Europäischen Patentanmeldungen EP 1 396 458 A2 und EP 1 547 960 A2 offenbart.

Je spitzer dabei der Keilwinkel der einzelnen Rippen ist, desto grösser wird zwar einerseits der Anpressdruck bei gleicher Radialkraft und damit die Traktionsfähigkeit. Andererseits kann bei zu spitzen Keilwinkeln ein Verklemmen des Riemens in den Rillen des Riemenrads auftreten. Ein solches Verklemmen kann als Stick-Slip-Effekt den Riemen zu unerwünschten Schwingungen anregen, was gleichermassen Geräusche verursacht und die dynamische Belastung des Riemens und die Gefahr des Herauslaufens aus seinen Führungen erhöht. Im Extremfall kann das Verklemmen auch zu einem Versagen der Aufzuganlage führen, wenn sich der Riemen nur noch ruckartig oder gar nicht mehr aus den Rillen des Riemenrads löst.

Eine Aufgabe der vorliegenden Erfindung ist es daher, eine Aufzuganlage zur Verfügung zu stellen, bei der die Gefahr des Verklemmens zwischen Riemen und Riemenrad vermindert ist.

Zur Lösung dieser Aufgabe ist eine Aufzuganlage nach dem Oberbegriff des Anspruchs 1 durch dessen kennzeichnende Merkmale weitergebildet. Gleichermassen wird zur Lösung dieser Aufgabe in Anspruch 7 ein Riemen für eine solche Aufzuganlage vorgeschlagen, in Anspruch 8 ein Verbund aus solchen Riemen und in Anspruch 11 ein Verfahren zur Montage eines solchen Verbunds in einer Aufzugsanlage geschützt.

Eine Aufzugsanlage nach der vorliegenden Erfindung umfasst eine Aufzugkabine, einen Antrieb und, vorteilhafterweise, ein damit gekoppeltes Gegengewicht, das sich absenkt, wenn die Aufzugkabine vom Antrieb angehoben wird und umgekehrt. Weiterhin umfasst die Aufzuganlage eine Riemenanordnung mit wenigstens einem Riemen, wobei der Riemen einen Riemenkörper aufweist, in dem eine Zugträgeranordnung angeordnet ist und der auf einer ersten Querschnittseite in Richtung der Höhe des Riemens eine erste Kontaktfläche und auf einer der ersten Querschnittseite in Richtung der Höhe des Riemens gegenüberliegenden zweiten Querschnittseite eine zweite Kontaktfläche aufweist.

Der Antrieb umfasst bevorzugt eine oder mehrere Riemenräder, insbesondere eine oder mehrere Treibscheiben bzw. eine Treibwelle mit mehreren Treibzonen, die von den Riemen der Riemenanordnung zumindest teilweise umschlungen werden. Vorteilhafterweise umschlingen die Riemen die Riemenräder mit einem Umschlingungswinkel von 180°, vorzugsweise kleiner 180°, vorzugsweise kleiner 150°, vorzugsweise kleiner 120°, vorzugsweise 90°. Aufgrund der kleinen möglichen Biegeradien der Riemen ist es möglich den Antrieb mit einer separaten Treibscheibe zu verbinden haben oder aber Treibzonen in eine Abtriebswelle des Antriebs zu integrieren, so dass von einer Treibwelle gesprochen wird. Vorteilhafterweise ist der Durchmesser der Riemenräder kleiner/gleich 220mm, vorzugsweise kleiner 180mm, vorzugsweise kleiner 140mm, vorzugsweise kleiner 100mm, vorzugsweise kleiner 90mm, vorzugsweise kleiner 80mm auf. Die Zugkräfte werden von der Treibscheibe bzw. eine Treibwelle reib- und/oder formschlüssig in die Riemen einleiten. Sind Riemen der Riemenanordnung als Keilriemen ausgebildet, kann die Lauffläche der Riemenräder weitgehend komplementär geformte Rillen aufweisen, in die die Keilrippen eingreifen. Vorteilhaft liegen bei weitgehend komplementär geformten Rillen die Flanken der Keilrippen nur an den Flanken der Rillen reibschlüssig an; die Bereiche zwischen den Riemenflanken sind hingegen nicht im Kontakt mit den Rillengründen und Rillenspitzen.

Der Riemenkörper besteht in einer vorteilhaften Ausbildung aus einem Elastomer, beispielsweise PU und/oder EPDM. Zum Schutz gegen Abrieb und dynamische Zerstörung kann der Riemenkörper eine oder mehrere Umhüllungen, beispielsweise aus Textilgewebe, aufweisen.

Die Zugträgeranordnung umfasst einen oder bevorzugt mehrere Zugträger, insbesondere Stahl- und/oder Kunststoff-Corde. Die Corde können als Einfachdrähte ausgebildet oder bevorzugt aus ein- oder mehrfach verseilten Drähten aufgebaut sein. Sie sind vorteilhaft in oder nahe der neutralen Faser des Riemenquerschnitts angeordnet, in der bei einer Umschlingung eines Riemenrads keine oder nur geringe Zug- oder Druckspannungen auftreten.

Ein Riemen kann als endloser Riemen oder, bevorzugt, als endlicher Riemen ausgebildet sein, der erst beim Auflegen durch ein Riemenschloss endlos gemacht wird und somit insbesondere bei schwierigen Umlenkverhältnissen beispielsweise durch Öffnungen geführt oder auf nicht fliegende gelagerte Riemenräder aufgelegt werden kann.

Erfindungsgemäss weist die erste Kontaktfläche nur zwei Rippen auf und die zweite Kontaktfläche weist nur eine Rippe auf.

Unter teilweiser Aufgabe der einleitend geschilderten Vorteile von Flachriemen, insbesondere deren Flexibilität bei der Umschlingung von Riemenrädern, wird damit eine Aufzuganlage mit Riemen zur Verfügung gestellt, die in Riemenquerrichtung ein grösseres Flächenträgheitsmoment aufweisen und somit bezüglich Biegung um die Querachse steifer sind als herkömmliche Flachriemen. Solche Riemen erfahren daher bei der Umlenkung um ein Riemenrad eine höhere Vorspannung zurück in die gerade, unverformte Lage auf. Diese Vorspannung wirkt einem Verklemmen der Riemen an seitlichen Flanken des Riemenrads entgegen und reduziert damit vorteilhaft die Gefahr eines Verklemmen zwischen Riemen und Riemenrad. Dieser Effekt ist besonders vorteilhaft bei Keilrippenriemen, kann jedoch auch bei Flachriemen die Gefahr des Verklemmens mit seitlichen Führungswangen der Riemenräder vermindern.

Ein weiterer Vorteil liegt in dem zusätzlichen Volumen des Riemenkörpers in Richtung seiner Höhe. Dieses zusätzliche Volumen dämpft vorteilhaft Schwingungen und baut Stösse ab, was den Lauf eines solchen Riemens vergleichmässigt.

Die Übertragung der Umfangskraft zwischen Zugträgern und Riemenrad geschieht unter kurzzeitiger Schubverformung des Riemenkörpers. Die dabei auftretenden Wechselverformungen führen auf lange Sicht zu einer Zerrüttung des Riemenkörpers und limitieren damit die Lebensdauer eines Riemens. Auch hier kann vorteilhaft das zusätzliche Volumen des Riemens in Richtung seiner Höhe einerseits die Schubverformungen reduzieren und andererseits dabei entstehende Wärme über das grössere Volumen und insbesondere über die grössere Oberfläche besser abführen, was insgesamt die Lebensdauer eines Riemens vorteilhaft erhöht.

In einer bevorzugten Ausführung ist die Zugträgeranordnung in der neutralen Faser etwa in der Mitte des Riemens angeordnet.

In einer weiteren bevorzugten Ausführung umfasst der Riemenkörper einen ersten Teilriemen, in dem der Zugträger angeordnet ist, und einen damit in einer Längsfläche fest verbundenen zweiten Teilriemen. Dieser kann auf den ersten Teilriemen aufextrudiert werden, so dass sich beide Teilriemen an ihrer Längsfläche miteinander verbinden. Dabei können, wie beispielsweise aus der WO 2006/000500 A1 bekannt, Nuten in der Längsfläche des ersten Teilriemens vom zweiten Teilriemen ausgefüllt werden. Gleichermassen können die beiden Teilriemen verklebt sein.

In einer vorteilhaften Ausführung weisen beide Teilriemen im Wesentlichen dieselbe Höhe auf, so dass die Längsfläche etwa in der Mitte des Riemens angeordnet ist.

Bevorzugt umgibt der erste Teilriemen die Zugträgeranordnung ganz oder teilweise. Im letzteren Fall umgibt auch der zweite Teilriemen die Zugträgeranordnung derart, dass sie vollständig im Riemen angeordnet ist.

Sofern die Zugträgeranordnung vorteilhaft in der neutralen Faser angeordnet ist, in der bei einer Umlenkung um ein Riemenrad, i.e. einer Biegung um die Riemenquerachse keine Zug- und Druckspannungen auftreten, und die Zugträgeranordnung mehr im ersten Teilriemen angeordnet ist, erfährt der zweite Teilriemen bei der Umschlingung ein Riemenrad eine grössere Biegebeanspruchung und mithin grössere Zug- bzw. Druckspannungen. In einer vorteilhaften Ausführung ist daher der zweite Teilriemen weicher als der erste Teilriemen, so dass bei Biegung in der Zugträgerlage der zweite Teilriemen nicht durch Zugspannungen beschädigt wird, sondern diesen elastisch nachgibt. Insbesondere kann der zweite Teilriemen eine geringere Shore-Härte als der erste Teilriemen aufweist. So kann beispielsweise die Shore-Härte des ersten Teilriemens 85°Sh, die des zweiten 80°Sh betragen.

Die erste und/oder zweite Kontaktfläche kann bevorzugt eine Beschichtung mit einem bestimmten Reibwert aufweisen. Dieser Reibwert kann jeweils höher oder niedriger als der Reibwert des eigentlichen Riemenkörpers sein. Insbesondere kann die Beschichtung eine Polyamid ("PA")-Folie umfassen.

Beispielsweise kann auf der ersten Kontaktfläche, die zum Eingriff mit einer Treibscheibe bzw. Treibwelle vorgesehen ist, eine Beschichtung mit einem höheren Reibwert, auf der zweiten Kontaktfläche, die zum Eingriff mit einem Umlenkelement vorgesehen ist, eine Beschichtung mit niedrigerem Reibwert angeordnet sein. Alternativ zur Beschichtung kann auch eine Bedampfung oder eine Beflockung vorgesehen werden.

In einer besonders bevorzugten Ausführung sind die Rippen als Keilrippen ausgebildet. Gleichermassen sind auch dreieck- oder halbkreisförmige Rippenquerschnitte möglich. Bei dieser besonders bevorzugten Ausführung können vorteilhaft die Laufflächen von Riemenrädern, die von den Riemen umschlungen werden, zu den Rippen weitgehend komplementäre Rillen aufweisen, in die die Rippen eingreifen. Hierdurch kann bei gleicher Radialkraft, i.e. gleicher Riemenvorspannung bzw. Lagerbelastung ein höherer Anpressdruck und damit eine höhere Traktionsfähigkeit erreicht werden.

Bevorzugt weisen die Rippen einen keilförmigen Querschnitt mit einem Flankenwinkel von 60° bis 120° auf, wobei der Bereich von 80° bis 100° zu bevorzugen ist. Als Flankenwinkel ist der zwischen beiden Seitenflächen (Flanken) einer keilförmigen Rippe vorhandene Winkel bezeichnet. Jedoch sind aufgrund der höheren Steifigkeit gegenüber Biegungen um die Riemenquerachse auch Flankenwinkel unter 60°, also spitzere Winkel realisierbar.

Wenn vorteilhaft nicht nur die erste, sondern auch die zweite Kontaktfläche eine oder mehrere Rippen aufweist, kann der Riemen auch bei gegensinniger Umlenkung um zwei Riemenräder, bei der er das erste Riemenrad mit seiner ersten Kontaktfläche, das zweite Riemenrad mit seiner zweiten Kontaktfläche berührt, bei der Umschlingung beider Riemenräder in Querrichtung geführt werden, was vorteilhaft ein Herauslaufen des Riemens auch aus reinen Umlenkrollen vermeiden kann. Die Anzahl der Rippen auf beiden Kontaktflächen muss nicht notwendig identisch sein. Sofern beispielsweise das erste Riemenrad eine Treibscheibe bzw. Treibwelle, das zweite Riemenrad eine Umlenkrolle ist, kann die zweite Kontaktfläche, über die keine Zugkräfte aufgeprägt werden, weniger Rippen aufweisen. Insbesondere kann die erste Kontaktfläche zwei und die zweite Kontaktfläche eine Rippe aufweisen.

Insbesondere, wenn die erste und zweite Kontaktfläche unterschiedlich sind, beispielsweise unterschiedliche Reibwerte aufweisen, oder gleichermassen, wenn der erste und zweite Teilriemen nicht völlig identisch sind, beispielsweise die Zugträger mehr im ersten Teilriemen angeordnet sind und/oder dieser eine andere Härte als der zweite Zugträger aufweist, können die erste und zweite Kontaktfläche verschiedene Farben aufweisen, um ein korrektes Auflegen des Riemens zu gewährleisten. Hierzu können beispielsweise beide Kontaktflächen unterschiedlich eingefärbt oder beschichtet sein. Sofern der Riemen aus zwei Teilriemen zusammengesetzt ist, können beide Teilriemen aus Materialien unterschiedlicher Farbe bestehen.

In einer bevorzugten Ausführung umfasst die Riemenanordnung mehrere Riemen, die in Richtung ihrer Breite nebeneinander angeordnet sind. Vorteilhafterweise können diese Riemen formschlüssig miteinander verbunden sein. Hierzu kann beispielsweise ein erster Riemen einen in Richtung seiner Breite hervorstehenden Vorsprung aufweisen, der in eine entsprechende Aussparung eines daneben angeordneten zweiten Riemens eingreift. Derart können die Riemen bei der Montage einfach und lösbar miteinander verbunden werden, was das Auflegen und Abnehmen der schmaleren einzelnen Riemen gegenüber der resultierenden Riemenanordnung vereinfacht. Gleichermassen können die Riemen auch über Spannelemente miteinander verbunden oder unlösbar aneinander befestigt, beispielsweise miteinander verklebt werden.

Zur Herstellung eines Riemens wird vorteilhaft ein Verfahren vorgeschlagen, das folgende Schritte umfasst: Extrudieren des ersten Teilriemens derart, dass er die Zugträgeranordnung wenigstens teilweise umgibt, und Aufextrudieren des zweiten auf den ersten Teilriemen derart, dass die Zugträgeranordnung vollständig im Riemen angeordnet ist. Hierdurch ist es vorteilhaft möglich, auch mit bestehenden Extrudern, die auf die Herstellung von Flachriemen mit einem Breiten/Höhenverhältnis grösser eins ausgelegt sind, mit geringfügigen Modifikationen Riemen mit einem Breiten/Höhenverhältnis herzustellen, das im Wesentlichen gleich eins ist. Durch das Aufextrudieren verbinden sich die beiden Teilriemen thermisch, was eine festen und dauerhaften Verbindung bewirkt.

Zur Montage eines Riemens in einer Aufzugsanlage wird vorgeschlagen, einen mehrere Riemen über ein Montageband zu einem Verbund miteinander zu verbinden. Vorteilhafterweise sind die Riemen dabei vom Montageband zumindest teilweise umgeben und/oder das Montageband ist auf einer zweiten Kontaktfläche mit den Riemen verbunden. Auch ist es besonders vorteilhaft, wenn die Riemen in definierten Montageabständen zueinander mit dem Montageband verbunden sind.

Das eigentliche Verfahren zur Montage des Verbunds in einer Aufzugsanlage umfasst das Legen des Verbunds auf Riemenräder und das Fixieren der Riemen an Enden des Verbunds mit Riemenfixpunkten. Vorteilhafterweise werden die Riemen des Verbunds gemäss den Montageabständen auf Riemenräder gelegt. Dabei ist es besonders vorteilhaft, wenn die Riemen des Verbunds in Rillen mindestens einer Kabinen-Umlenkrolle und/oder Rillen mindestens einer Treibscheibe bzw. Treibwelle und/oder Rillen mindestens einer Gegengewichtstragrolle gelegt werden. Auch ist es für die Montage einfach und praktisch, den Verbund als Schlaufe in den Aufzugsschacht zu transportieren und von der Schlaufe abzurollen.

Weitere Aufgaben, Merkmale und Vorteile ergeben sich aus den Unteransprüchen und den nachfolgend beschriebenen Ausführungsbeispiele. Hierzu zeigt:
- Fig. 1: einen zu einer Aufzugskabinenfront parallelen Schnitt durch eine Aufzugsanlage ;
- Fig. 2: einen Schnitt durch einen Riemen der Aufzuganlage aus Fig. 1 nach einer ersten Ausführung in Form eines Keilrippenriemens;
- Fig. 3: einen Schnitt durch einen Riemen der Aufzuganlage aus Fig. 1 nach einer zweiten Ausführung in Form eines Keilrippenriemens (Diese Ausführungsform gehärt zum Gegenstand der Erfindumg.
- Fig. 4: einen Schnitt durch eine Riemenanordnung der Aufzuganlage aus Fig. 1 nach einer dritten Ausführung;
- Fig. 5: einen Schnitt durch einen Riemen der Aufzuganlage aus Fig. 1 nach einer vierten Ausführung in Form eines Keilrippenriemens;
- Fig. 6: einen Schnitt durch einen Verbund aus mehreren Riemen der ersten Ausführung gemäss Fig. 2;
- Fig. 7: eine Aufzugsanlage aus Fig. 1 in einem ersten Montageschritt;
- Fig. 8: eine Aufzugsanlage aus Fig. 1 in einem zweiten Montageschritt;
- Fig. 9: eine Aufzugsanlage aus Fig. 1 in einem dritten Montageschritt;
- Fig. 10: einen Schnitt durch einen Riemen der Aufzuganlage aus Fig. 1 nach einer fünften Ausführung in Form eines Keilrippenriemens; und
- Fig. 11: einen Schnitt durch einen Riemen der Aufzuganlage aus Fig. 1 nach einer sechsten Ausführung in Form eines Keilrippenriemens.

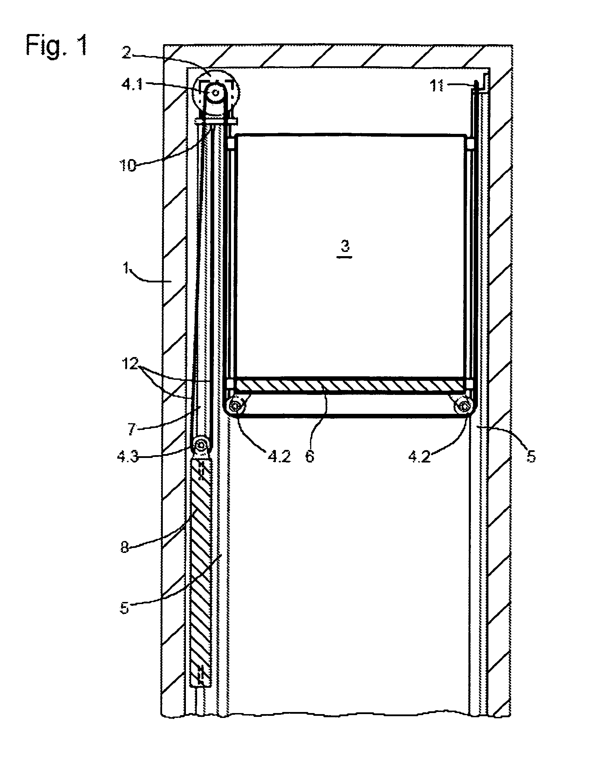

Fig. 1 zeigt einen Schnitt durch ein in einem Aufzugsschacht 1 installiertes Aufzugssystem nach einer Ausführung. Dieses umfasst einen in einem Aufzugsschacht 1 fixierten Antrieb 2 mit einer Treibscheibe bzw. Treibwelle 4.1, eine an Kabinenführungsschienen 5 geführte Aufzugskabine 3 mit unterhalb des Kabinenbodens 6 angebrachten Umlenkrollen in Form von Kabinentragrollen 4.2, ein an Gegengewichtsführungsschienen 7 geführtes Gegengewicht 8 mit einer weiteren Umlenkrolle in Form einer Gegengewichtstragrolle 4.3, und einen als Keilrippenriemen 12 ausgebildeten Tragriemen für die Aufzugskabine 3 und das Gegengewicht 8, der die Antriebskraft von der Treibscheibe bzw. Treibwelle 4.1 der Antriebseinheit 2 auf die Aufzugskabine und das Gegengewicht überträgt.

Der Keilrippenriemen 12 ist an einem seiner Enden unterhalb der Treibscheibe bzw. Treibwelle 4.1 an einem ersten Riemenfixpunkt 10 befestigt. Von diesem aus erstreckt er sich abwärts bis zu der Gegengewichtstragrolle 4.3, umschlingt diese und erstreckt sich von dieser aus zur Treibscheibe bzw. Treibwelle 4.1, umschlingt diese und verläuft entlang der gegengewichtsseitigen Kabinenwand abwärts, umschlingt auf beiden Seiten der Aufzugskabine je eine unterhalb der Aufzugskabine 3 angebrachte Kabinentragrolle 4.2 um je 90° und verläuft entlang der dem Gegengewicht 8 abgewandten Kabinenwand aufwärts zu einem zweiten Riemenfixpunkt 11.

Die Ebene der Treibscheibe bzw. Treibwelle 4.1 kann rechtwinklig zur gegengewichtsseitigen Kabinenwand angeordnet sein und ihre Vertikalprojektion ausserhalb der Vertikalprojektion der Aufzugskabine 3 liegen. Es ist daher zu bevorzugen, dass die Treibscheibe bzw. Treibwelle 4.1 einen geringen Durchmesser von kleiner/gleich 220mm, vorzugsweise kleiner 180mm, vorzugsweise kleiner 140mm, vorzugsweise kleiner 100mm, vorzugsweise kleiner 90mm, vorzugsweise kleiner 80mm aufweist, damit der Abstand zwischen der linksseitigen Kabinenwand und der dieser gegenüber liegenden Wand des Aufzugsschachts 1 möglichst klein sein kann. Ausserdem ermöglicht ein geringer Durchmesser der Treibscheibe bzw. Treibwelle 4.1 die Verwendung eines getriebelosen Antriebsmotors mit relativ geringem Antriebsdrehmoment als Antriebseinheit 2. Die Riemenfixpunkte 10, 11 sind dem Fachmann bekannte Vorrichtungen, bei denen der Keilrippenriemen 12 zwischen einem Keil und ein Gehäuse geklemmt wird.

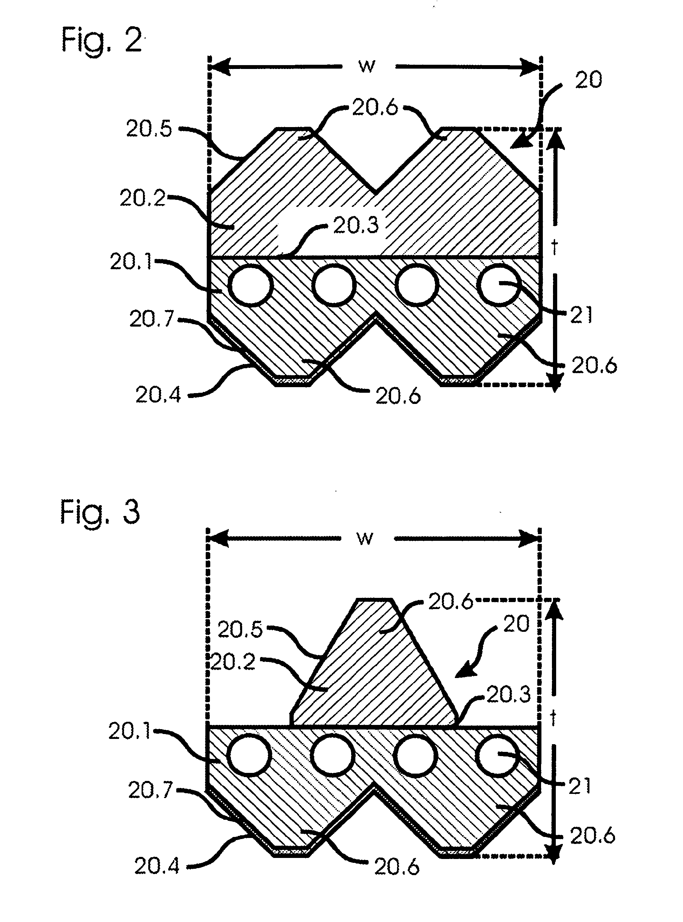

Fig. 2 zeigt einen Schnitt durch einen Riemen der Aufzuganlage aus Fig. 1 nach einer ersten Ausführung in Form eines Keilrippenriemens 12. Dieser weist einen Riemenkörper 20 auf, der einen ersten Teilriemen 20.1 und einen zweiten Teilriemen 20.2 umfasst. Beide Teilriemen sind in einer Längsfläche 20.3 fest miteinander verbundenen. In Fig. 2 ist die Längsfläche 20.3 schematisch als eben eingezeichnet. Obwohl nicht dargestellt, kann die Längsfläche eines Teilkörpers jedoch Ausnehmungen aufweisen, in die Ausformungen des anderen Teilkörpers eingreifen, um die Verbindung beider Teilkörper zu verstärken.

Eine erste Kontaktfläche 20.4 des ersten Teilkörpers ist zum Kontakt mit der Treibscheibe bzw. Treibwelle 4.1 und der Gegengewichtstragrolle 4.3 vorgesehen. Sie weist hierzu zwei Keilrippen 20.6 auf, die in hierzu weitgehend komplementäre Rillen der Riemenräder 4.1, 4.3 eingreifen können und durch diese seitlich geführt werden. Hierdurch erhöht sich vorteilhaft der Anpressdruck und damit die Traktionsfähigkeit des Antriebs 2.

Eine zweite Kontaktfläche 20.6 des zweiten Teilkörpers 20.2 ist zum Kontakt mit den Kabinentragrollen 4.2 vorgesehen und weist hierzu in analoger Weise zwei Keilrippen 20.6 auf, die in hierzu weitgehend komplementäre Rillen der Riemenräder 4.2 eingreifen können und durch diese seitlich geführt werden. In einer zweiten, in Fig. 3 dargestellten Ausführung weist die zweite Kontaktfläche nur eine Rippe 20.6 auf, die zur Seitenführung des Riemens 12 in den Kabinentragrollen 4.2 ausreicht.

Im ersten Teilriemen 20.1 sind vier Zugträger 21 in Form von verseilten Stahldrähten nebeneinander angeordnet. Gleichwohl können auch mehr, beispielsweise fünf Zugträger oder weniger, beispielsweise 3 Zugträger nebeneinander angeordnet sein. Ebenso können die einzelnen Zugträger auch in Richtung der Höhe des Riemens 12 versetzt zueinander angeordnet sein.

Die Zugträger sind in der neutralen Faser des Riemenkörpers 20 angeordnet, in der keine Zug- oder Druckspannungen auftreten, wenn der Riemen 12 ein Riemenrad 4, insbesondere die Treibscheibe bzw. Treibwelle 4.1 umschlingt. Aufgrund des grösseren Abstandes der zweiten Kontaktfläche 20.5 von dieser neutralen Faser sind die bei der Umschlingung im zweiten Teilriemen 20.2 auftretenden Zugspannungen grösser als die im ersten Teilriemen 20.1 vorliegenden Druckspannungen. Daher ist als Material für den zweiten Teilriemen ein weicheres Elastomer gewählt, im Ausführungsbeispiel mit einer Shore-Härte von 80°Sh gegenüber einer Shore-Härte von 85°Sh des ersten Teilriemens. In der zweiten Ausführung nach Fig. 3 ist der zweite Teilriemen im Querschnitt kleiner als der erste und weist insbesondere nur eine Keilrippe 20.6 auf. Auch hierdurch ist er entsprechend weicher als der erste Teilriemen.

Die erste Kontaktfläche 20.4 weist wenigstens in den Bereichen ihrer Keilrippen 20.6, die mit den Flanken der Treibscheibe bzw. Treibwelle 4.1 in Reibschluss treten, eine Beschichtung 20.7 mit einer PA-Folie auf. Vorteilhaft ist die gesamte erste Kontaktfläche 20.4 in einem kontinuierlichen oder diskontinuierlichen Verfahren beschichtet, was die Herstellung vereinfacht. Alternativ zur Beschichtung 20.7 kann auch eine Bedampfung 20.7 oder eine Beflockung 20.7 vorgesehen werden. Die Bedampfung ist beispielsweise eine Metallbedampfung. Die Beflockung ist beispielsweise eine Beflockung mit kurzen Kunst- oder Naturfasern. Auch diese Bedampfung oder Beflockung kann sich über die gesamte erste Kontaktfläche 20.4 erstrecken und in kontinuierlichen oder diskontinuierlichen Verfahren erfolgen. Prinzipiell ist es bei weitgehend komplementär geformten Paarungen von Keilrippen und Rillen, bei denen nur die Flanken der Keilrippen reibschlüssig an den Rillen anliegen auch möglich, nur diese Flanken der Keilrippen mit einer Beschichtung 20.7 oder Bedampfung 20.7 oder Beflockung 20.7 zu versehen, so dass die Bereiche zwischen den Riemenflanken die ja nicht im Kontakt mit den Rillengründen und Rillenspitzen stehen, unbeschichtet sind.

Das Verhältnis der maximalen Breite w zur maximalen Höhe t des Riemenkörpers einschliesslich der Keilrippen 20.6 liegt im Bereich von 0,8 bis 1,0. Im Ausführungsbeispiel ist das Verhältnis im Wesentlichen gleich eins. Dadurch wird der Riemen 12 - auch bei der in Fig. 3 gezeigten zweiten Ausführung - gegenüber Biegungen um seine Querachse steifer. Die daraus resultierende höhere Vorspannung bei Umschlingung eines Riemenrads mit Rillen vermindert die Gefahr eines Verklemmens des Riemens im Riemenrad. Andere Verhältnisse der maximalen Breite w zur maximalen Höhe t des Riemenkörpers einschliesslich der Keilrippen 20.6 im Bereich von 0,6 bis 1,0 sind bei Kenntnis der vorliegenden Erfindung natürlich auch möglich.

Der zweite Teilriemen dämpft Schwingungen und absorbiert Stösse. Darüber hinaus reduziert er Schubspannungen im ersten Teilriemen, die bei der Übertragung von Zugkräften auf die Zugträger auftreten. Schliesslich erhöht er über sein zusätzliches Volumen und seine Oberfläche die Wärmeabgabe. Damit erhöht sich vorteilhaft die Lebensdauer eines Riemens.

Die Treibscheibe bzw. Treibwelle 4.1, die Kabinentragrollen 4.2 und die Gegengewichtstragrolle 4.3 sind an ihrer Peripherie mit Rillen versehen, die weitgehend komplementär zu den Rippen des Keilrippenriemens 12 geformt sind. Wo der Keilrippenriemen 12 eines der Riemenräder 4.1, 4.2 oder 4.3 zumindest teilweise umschlingt, liegen seine Rippen in korrespondierenden Rillen des Riemenrads, wodurch eine ausgezeichnete Führung des Keilrippenriemens auf diesem Riemenrad gewährleistet ist. Ausserdem wird durch eine zwischen den Rillen der Treibscheibe bzw. Treibwelle 4.1 und den Rippen des Keilrippenriemens 12 entstehende Keilwirkung die Traktionsfähigkeit verbessert.

Bei der Umschlingung der Kabinentragrollen 4.2 unterhalb der Aufzugskabine 3 ist daher im Gegensatz zu herkömmlichen Aufzuganlagen auch eine seitliche Führung zwischen den Kabinentragrollen 4.2 und dem Keilrippenriemen 12 gegeben, da der Keilrippenriemen auch Rippen auf seiner von den Kabinentragrollen 4.2 abgewandten Seite aufweist.

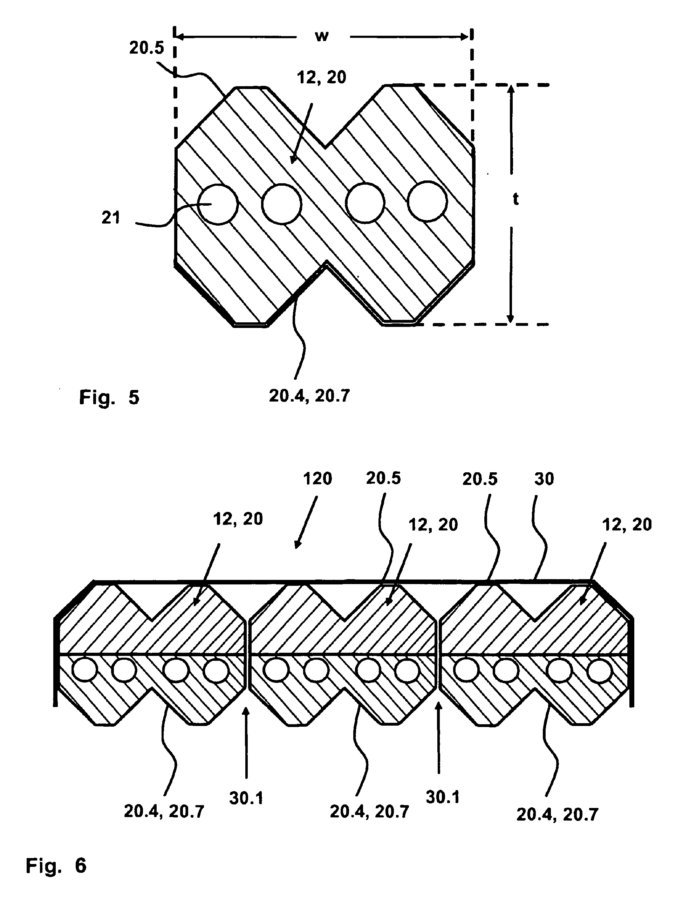

In der Ausführungsform gemäss Fig. 5 sind die Zugträger 21 in der neutralen Faser etwa in der Mitte des Riemens 12 angeordnet. In dieser Ausführungsform besteht der Riemenkörper 20 nicht aus Teilriemen. Das Elastomer-Material ist derart auf die Zugträgeranordnung 21 aufextrudiert, dass es diese ganz oder teilweise umgibt und die Zugträgeranordnung 21 in etwa mittig zur maximalen Höhe t im Riemenkörper 20 zu liegen kommt. Ansonsten entspricht diese Ausführungsform denjenigen gemäss Fig. 2 bis 4.

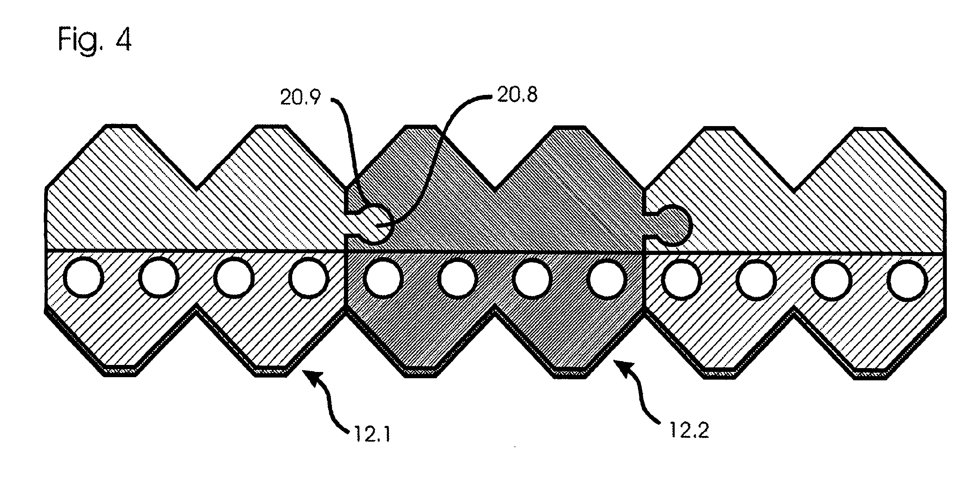

Obwohl in Fig. 1 nicht erkennbar, kann eine Riemenanordnung in einer Aufzuganlage mehr als einen Riemen umfassen. Fig. 4 zeigt hierzu eine bevorzugte Ausführung einer solchen Riemenanordnung. Dabei greift je wenigstens ein Vorsprung 20.8 eines ersten Riemens 12.1 in eine entsprechende Aussparung 20.9 eines benachbarten zweiten Riemens 12.2 ein, was die seitliche Führung weiter verbessert und einem Verdrillen bzw. Verbiegen der gesamten Riemenanordnung vor allem im freien Trumbereich vermindert. In einer nicht dargestellten alternativen Ausgestaltung kann auch der zweite Riemen 12.2 an beiden Querseiten Vorsprünge aufweisen, die in entsprechende Aussparungen der benachbarten Riemen eingreifen. Vorteilhaft weisen die äussersten Riemen einer durch Vorsprünge miteinander verbundenen Riemenanordnung keine Aussparung bzw. keinen Vorsprung auf.

Durch eine solche Riemenanordnung kann vor Ort eine Riemenanordnung beliebiger Breite einfach und rasch aus schmalen, leicht zu handhabenden einzelnen Riemen zusammengesetzt werden, was die Herstellung und Lagerhaltung, den Transport und die (De)Montage deutlich vereinfacht.

Zur Herstellung eines Riemens kann zunächst des erste Teilriemens 20.1 derart extrudiert werden, dass er die Zugträgeranordnung 21 ganz oder teilweise umgibt. In einem anschliessenden zweiten Schritt kann dann der zweiten Teilriemen 20.2 derart auf den ersten Teilriemen 20.1 aufextrudiert werden, dass die Zugträgeranordnung vollständig im Riemen angeordnet ist. Damit ist es vorteilhaft möglich, vorhandene Maschinen, die zur Herstellung eines Riemens, dessen Breite seine Höhe übersteigt, etwa in Form des ersten Teilriemens 20.1, mit geringen Modifikationen auch zur Herstellung eines Riemens mit einem Breiten/Höhenverhältnis von ungefähr 1 einzusetzen.

Die Fig. 6 bis 9 beziehen sich auf die Montage des Riemens 12 in einer Aufzugsanlage. Fig. 6 zeigt mehrere Riemen 12, die über ein Montageband 30 miteinander verbunden sind. Das Montageband 30 umgibt die Riemen 12 zumindest teilweise. Beispielsweise bilden drei, vier oder sechs oder ach acht Riemen 12 einen teilweise von Montageband 30 umgebenen Verbund 120, der als Schlaufe aufgerollt einfach und problemlos in den Aufzugsschacht 1 transportierbar ist. Das Montageband 30 ist beispielsweise reversibel oder irreversibel stoffschlüssig an den Riemen 12 fixiert. Vorteilhafterweise ist es ein dünnes Kunststoffband mit einseitiger Klebeschicht. Das Kunststoffband ist über die Klebeschicht mit den Riemen 12 verbunden. Bei reversiblem Stoffschluss lässt sich das Klebeband 30 von den Riemen 12 abziehen und die gelösten Riemen 12 so vereinzeln. Vorteilhafterweise ist das Montageband 30 auf der von den ersten Kontaktflächen 20.4 abgewandten zweiten Kontaktfläche 20.5 der Riemenkörper 20 angebracht, so dass die Kontaktflächen 20.4 der einzelnen Riemen 12 auch im Verbund 120 frei zugänglich sind. Insbesondere lassen sich die einzelnen Riemen 12 im Verbund 120 über ihre Kontaktflächen 20.4 in entsprechende Rillen der Riemenräder legen. Dabei garantiert das Montageband 30 auch den richtigen seitlichen Abstand der Riemen 12 zueinander auf den Riemenrädern. Hierzu sind die Riemen 12 in seitlichen Montageabständen 30.1 zueinander mit dem Montageband 30 verbunden, welche den seitlichen Abständen der einzelnen Riemen 12 auf den Riemenrädern entsprechen. Zur Montage des Verbunds 120 in der Aufzugsanlage werden die folgenden Schritte durchgeführt, der Verbund 120 wird auf Riemenräder 4.1, 4.2, 4.3 gelegt und Riemen 12 an Enden 12.1, 12.2 des Verbunds 120 werden mit Riemenfixpunkten 10, 11 fixiert. Dabei werden die Riemen 12 des Verbunds 120 gemäss Montageabständen 30.1 auf Riemenräder 4.1, 4.2, 4.3 gelegt.

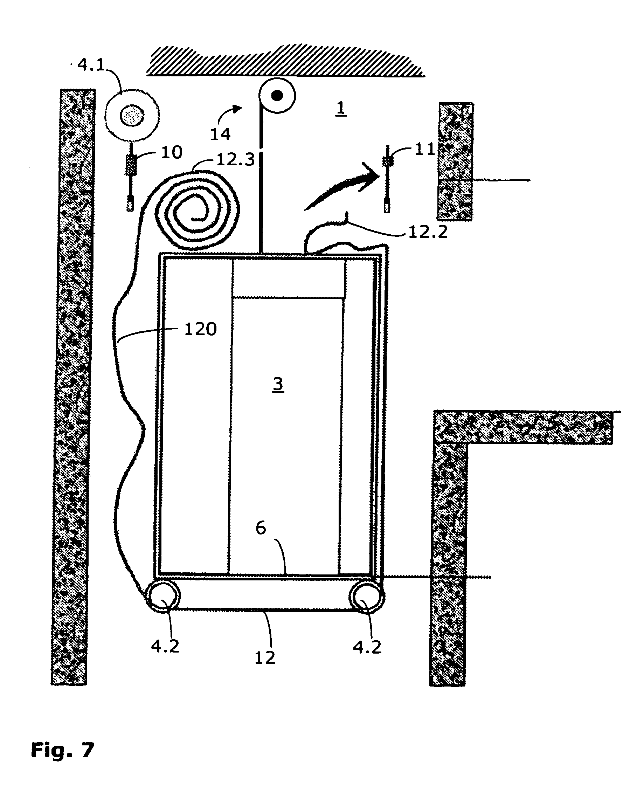

Dazu ist es zweckmässig ein Hilfshebezeug 14 zu verwenden, welches im vorliegenden Beispiel der Fig. 7 bis 9 an der Decke des Aufzugsschachts 1 befestigt ist. Als Hilfshebezeug 14 wird vorzugsweise eine im obersten Schachtbereich angebrachte flaschenzugartige Einrichtung verwendet. Es wäre auch möglich, eine im untersten Schachtbereich angeordnete Fluid-Hebevorrichtung (z.B. ein Hydrauliksystem) oder auch einen Baukran einzusetzen.

Die Aufzugskabine 3 ist mindestens in Strukturform vorhanden. Die endgültige Fertigstellung der Aufzugskabine 3 kann später erfolgen. Die Aufzugskabine 3 besitzt eine Bodenplatte oder einen unteren Strukturteil mit einer Unterfläche 6, an der erste Kabinen-Umlenkrollen 4.2 und zweite Kabinen-Umlenkrollen 4.2 angeordnet sind, sowie eine Deckplatte (oder einen oberen Strukturteil), die im vorliegenden Beispiel eine Art Arbeitsplattform bildet. Die Arbeitsplattform kann auch durch die Bodenplatte der Aufzugskabine 3 gebildet sein, im Falle, dass die vorhandene Strukturform der Aufzugskabine 3 noch keine Seitenwände umfasst.

Die Aufzugskabine 3 ist an das Hilfshebezeug 14 ankoppelbar und durch dieses im Aufzugsschacht 1 auf- und abwärts verfahrbar. Sobald die Aufzugskabine 3 am Hilfshebezeug 14 angekoppelt und fixiert ist, wird der Verbund 120 gemäss Fig. 6 im Aufzugsschacht 1 verlegt.

Gemäss Fig. 7 wird der Verbund 120 in Form einer Schlaufe 12.3 auf das Dach der Aufzugskabine 3 transportiert, dort deponiert und teilweise abgerollt. Vorteilhafterweise befindet sich die Aufzugskabine 3 dazu in der Schachtgrube, damit der Monteur die Schlaufe 12.3 vom Erdgeschoss des Gebäudes einfach das Dach der Aufzugskabine 3 legen kann. Das eine Ende 12.2 des abgerollten Verbunds 120 wird an einer Seite an der Aufzugskabine 3 herabgelassen, unter der Aufzugskabine 3 zur gegenüberliegenden Seite der Aufzugskabine 3 geführt und von dort wieder zum Dach der Aufzugskabine 3 hoch geführt. Der Monteur kann natürlich auch zuerst den Verbund 120 um die Kabinentragrollen 4.2 legen und dann die Schlaufe 12.3 auf dem Dach der Aufzugskabine 3 deponieren. Nun werden die Riemen 12 des Verbunds 120 über die Kontaktflächen 20.4 in die entsprechenden Rillen der Kabinentragrollen 4.2 eingelegt. Optional werden in den Figuren nicht dargestellte Entgleisungsschutze, welche sowohl in radialer als auch in axialer Richtung ein Entgleisen der Riemen 12 bei Tragmittellose verhindern, bei den Kabinentragrollen 4.2 angebracht. Das Ende 12.2 wird provisorisch auf dem Dach der Aufzugskabine 3 fixiert. Nun wird die Aufzugskabine 3 vom Hilfshebezeug 14 in den Schachtkopf verfahren. Die einzelnen Riemen 12 des Endes 12.2 werden einzeln an jeweils einem zweiten Riemenfixpunkt 11 definitiv fixiert.

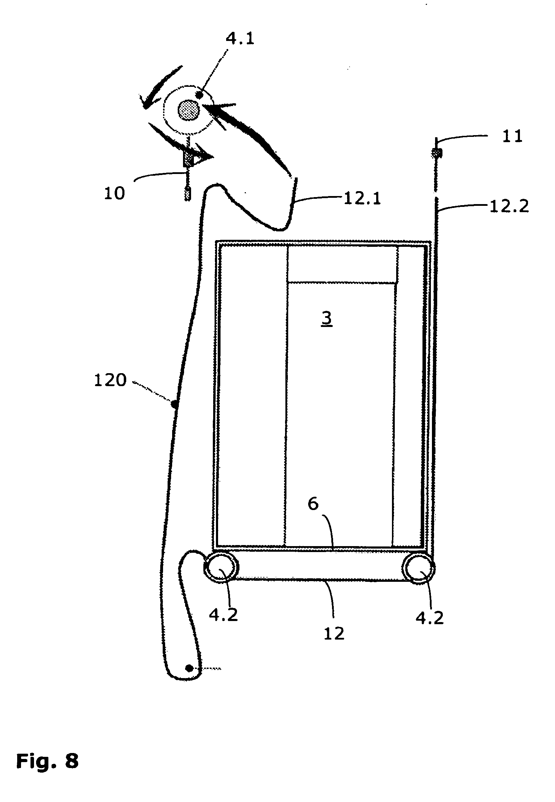

Im weiteren Montageschritt gemäss Fig. 8 wird die Schlaufe 12.3 vom Dach der Aufzugskabine 3 in die Grube des Aufzugsschachts abgerollt. Dabei wird das andere Ende 12.1 des abgerollten Verbunds 120 festgehalten und um die Treibscheibe bzw. Treibwelle 4.1 geführt und in die Grube des Aufzugsschachts abgelassen. Falls genügend Platz vorhanden ist, kann der Monteur kann auch die ganze Schlaufe 12.3 um die Treibscheibe bzw. Treibwelle 4.1 führen und sie dann in die Grube des Aufzugsschachts ablassen. Nun werden die Riemen 12 des Verbunds 120 über die Kontaktflächen 20.4 in die entsprechenden Rillen der Treibscheibe bzw. Treibwelle 4.1 eingelegt. Wiederum werden optional Entgleisungsschutze bei der Treibscheibe bzw. Treibwelle 4.1 angebracht.

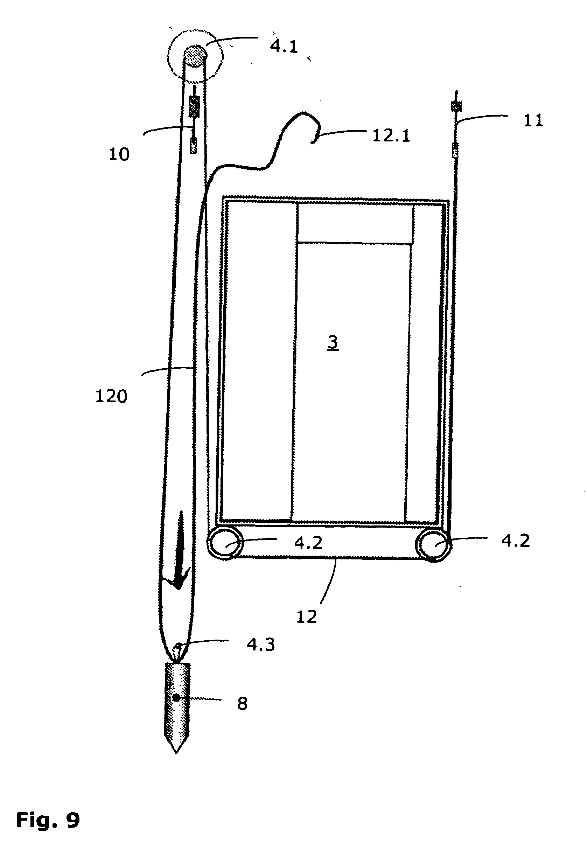

Im folgenden Montageschritt gemäss Fig. 9 wird das andere Ende 12.1 des Verbunds 120 in der Schachtgrube um eine Gegengewichtstragrolle 4.3 gelegt. Die Aufzugskabine 3 wird vom Hilfshebezeug 14 in die Schachtgrube verfahren und das andere Ende 12.1 wird provisorisch auf dem Dach der Aufzugskabine 3 fixiert. Daraufhin wird die Aufzugskabine 3 vom Hilfshebezeug 14 in den Schachtkopf verfahren und die Riemen 12 des Verbunds 120 werden über die Kontaktflächen 20.4 in die entsprechenden Rillen der Gegengewichtstragrolle 4.3 eingelegt. Optional werden Entgleisungsschutze bei der Gegengewichtstragrolle 4.3 angebracht. Die einzelnen Riemen 12 des anderen Endes 12.1 werden nun einzeln an jeweils einem ersten Riemenfixpunkt 10 definitiv fixiert. Erst zu diesem Zeitpunkt, wo die Riemen 12 vollständig im Aufzugsschacht 1 verlegt sind, kann das Montageband 30 vom Verbund 120 entfernt werden.

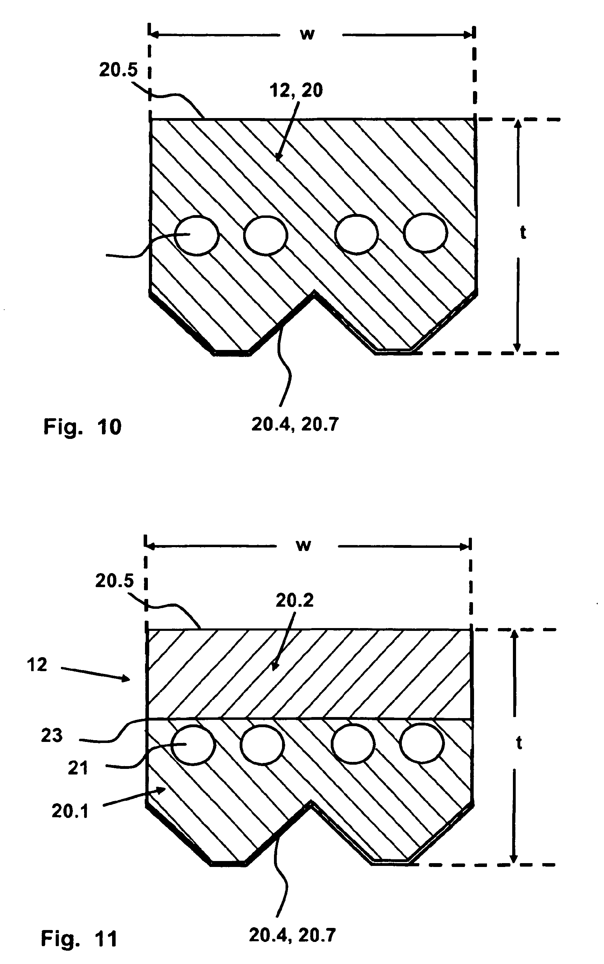

Die fünfte Ausführungsform mit einem Riemen 12 gemäss Fig. 10 entspricht weitgehend derjenigen gemäss Fig. 5, so dass auf die Beschreibung zu Fig. 5 verwiesen wird. Im einzigen Unterschied zur Ausführungsform gemäss Fig. 5 ist in der Ausführungsform gemäss Fig. 10 der Riemenkörper 20 auf der zweiten Querschnittsseite mit einer flachen zweiten Kontaktfläche 20.5 ausgebildet. Diese flache zweite Kontaktfläche 20.5 weist keine Profilierung in Form von Quer- oder Längsrippen auf.

Schliesslich entspricht die sechste Ausführungsform mit einem Riemen 12 gemäss Fig. 11 derjenigen gemäss Fig.10, wobei im einzigen Unterschied zur Ausführungsform gemäss Fig. 10 der Riemenkörper gemäss Fig. 11 aus zwei Teilriemen 20.1, 20.2 wie in den Ausführungsformen gemäss den Fig. 2 bis 4 und 6 beschrieben und dargestellt, besteht. Die flache zweite Kontaktfläche 20.5 ist parallel zur Längsfläche 20.3 angeordnet. Die Zugträgeranordnung 21 kommt in etwa mittig zur maximalen Höhe t des Riemenkörpers zu liegen.

## Patentansprüche

1. Aufzugsanlage mit einer Aufzugkabine (3), einem Antrieb (2) und einer Riemenanordnung mit wenigstens einem Riemen (12), wobei der Riemen (12) einen Riemenkörper (20) umfasst, in dem eine Zugträgeranordnung (21) angeordnet ist und der auf einer ersten Querschnittseite in Richtung der Höhe des Riemens (12) eine erste Kontaktfläche (20.4) und auf einer der ersten Querschnittseite in Richtung der Höhe des Riemens (12) gegenüberliegenden zweiten Querschnittseite eine zweite Kontaktfläche (20.5) aufweist, **dadurch gekennzeichnet, dass** die erste Kontaktfläche (20.4) nur zwei Rippen (20.6) aufweist und die zweite Kontaktfläche (20.5) nur eine Rippe (20.6) aufweist.

2. Aufzugsanlage nach Anspruch 1, wobei der Riemenkörper (20) einen ersten Teilriemen (20.1), in dem die Zugträgeranordnung (21) angeordnet ist, und einen damit in einer Längsfläche (20.3) fest verbundenen zweiten Teilriemen (20.2) umfasst.

3. Aufzugsanlage nach Anspruch 2, wobei der zweite Teilriemen (20.2) eine geringere Härte, insbesondere eine geringere Shore-Härte als der erste Teilriemen (20.1) aufweist.

4. Aufzugsanlage nach einem der Ansprüche 1 bis 3, wobei die erste und/oder zweite Kontaktfläche eine Beschichtung (20.7) mit einem bestimmten Reibwert aufweist.

5. Aufzugsanlage nach einem der vorhergehenden Ansprüche, wobei ein Verhältnis einer maximalen Breite (w) zu einer maximalen Höhe (t) des Riemens (12) im Bereich von 0.8 bis 1.0, vorzugsweise im Bereich von 0.9 bis 1.0, und besonders bevorzugt bei 1.0 liegt.

6. Aufzugsanlage nach einem der vorhergehenden Ansprüche, wobei die Riemenanordnung mehrere Riemen (12) umfasst, die in Richtung ihrer Breite nebeneinander angeordnet und formschlüssig miteinander verbunden sind.

7. Riemen (12) für eine Aufzuganlage nach einem der vorhergehenden Ansprüche, wobei der Riemen (12) einen Riemenkörper (20) umfasst, in dem eine Zugträgeranordnung (21) angeordnet ist und der auf einer ersten Querschnittseite in Richtung der Höhe des Riemens (12) eine erste Kontaktfläche (20.4) und auf einer der ersten Querschnittseite in Richtung der Höhe des Riemens (12) gegenüberliegenden zweiten Querschnittseite eine zweite Kontaktfläche (20.5) aufweist, **dadurch gekennzeichnet, dass** die erste Kontaktfläche (20.4) nur zwei Rippen (20.6) aufweist und die zweite Kontaktfläche (20.5) nur eine Rippe (20.6) aufweist.

8. Verbund (120) mit mehreren Riemen (12) nach Anspruch 7, wobei die Riemen (12) über ein Montageband (30) miteinander verbunden sind.

9. Verbund (120) nach Anspruch 8, wobei die Riemen (12) vom Montageband (30) zumindest teilweise umgeben sind und/oder das Montageband (30) auf einer zweiten Kontaktfläche (20.5) mit den Riemen (12) verbunden ist.

10. Verbund (120) nach Anspruch 8 oder 9, wobei die Riemen (12) in Montageabständen (30.1) zueinander mit dem Montageband (30) verbunden sind.

11. Verfahren zur Montage eines Verbunds (120) nach einem der Ansprüche 8 bis 10 in einer Aufzugsanlage, das folgende Schritte umfasst:
a) Legen des Verbunds (120) auf Riemenräder (4.1, 4.2, 4.3), und
b) Fixieren der Riemen (12) an Enden (12.1, 12.2) des Verbunds (120) mit Riemenfixpunkten (10, 11).

12. Verfahren nach Anspruch 11, wobei der Verbund (120) gemäss Montageabständen (30.1) auf Riemenräder (4.1, 4.2, 4.3) gelegt werden.

13. Verfahren nach Anspruch 11 oder 12, wobei die Riemen (12) des Verbunds (120) in Rillen mindestens einer Kabinen-Umlenkrolle (4.2) und/oder Rillen mindestens einer Treibscheibe bzw. Treibwelle (4.1) und/oder Rillen mindestens einer Gegengewichtstragrolle (4.3) gelegt werden.

14. Verfahren nach einem der Ansprüche 11 bis 13, wobei ein Montageband (30) entfernt wird, nachdem der Verbund (120) vollständig im Aufzugsschacht (1) verlegt worden ist.

## Claims

1. Lift installation with a lift cage (3), a drive (2) and a belt arrangement with at least one belt (12), wherein the belt (12) comprises a belt body (20) in which a tensile carrier arrangement (21) is arranged and which has a first contact surface (20.4) on a first cross-sectional side in the direction of the height of the belt (12) and a second contact surface (20.5) on a second cross-sectional side opposite the first cross-sectional side in the direction of the height of the belt (12), **characterised in that** the first contact surface (20.4) has only two ribs (20.6) and the second contact surface (20.5) only one rib (20.6).

2. Lift installation according to claim 1, wherein the belt body (20) comprises a first part belt (20.1) in which the tensile carrier arrangement (21) is arranged and a second part belt (20.2) fixedly connected therewith in a longitudinal surface (20.3).

3. Lift installation according to claim 2, wherein the second part belt (20.2) has a lesser hardness, particularly a lesser Shore hardness, than the first part belt (20.1).

4. Lift installation according to any one of claims 1 to 3, wherein the first and/or second contact surface has or have a coating (20.7) with a specific coefficient of friction.

5. Lift installation according to any one of the preceding claims, wherein a ratio of the maximum width (w) to the maximum height (t) of the belt (12) lies in the region of 0.8 to 1.0, preferably in the region of 0.9 to 1.0 and particularly preferably at 1.0.

6. Lift installation according to any one of the preceding claims, wherein the belt arrangement comprises several belts (12) which are arranged adjacent to one another in the direction of their width and which are connected together in mechanically positive manner.

7. Belt (12) for a lift installation according to any one of the preceding claims, wherein the belt (12) comprises a belt body (20) in which a tensile carrier arrangement (21) is arranged and which has a first contact surface (20.4) on a first cross-sectional side in the direction of the height of the belt (12) and a second contact surface (20.5) on a second cross-sectional side opposite the first cross-sectional side in the direction of the height of the belt (12), **characterised in that** the first contact surface (20.4) has only two ribs (20.6) and the second contact surface (20.5) only one rib (20.6).

8. Composite (120) with several belts (12) according to claim 7, wherein the belts (12) are connected together by way of an assembly band (30).

9. Composite (120) according to claim 8, wherein the belts (12) are at least partly surrounded by the assembly band (30) and/or the assembly band (30) is connected on a second contact surface (20.5) with the belts (12).

10. Composite (120) according to claim 8 or 9, wherein the belts (12) are connected at assembly spacings (30.1) from one another with the assembly belt (30).

11. Method for mounting of a composite (120) according to any one of claims 8 to 10 in a lift installation, comprising the following steps:
a) placing the composite (120) on belt wheels (4.1, 4.2, 4.3) and
b) fixing the belts (12) at ends (12.1, 12.2) of the composite (120) to belt fixing points (10, 11).

12. Method according to claim 11, wherein the composite (120) is placed on belt wheels (4.1, 4.2, 4.3) in accordance with assembly spacings (30.1).

13. Method according to claim 11 or 12, wherein the belts (12) of the composite (120) are placed in grooves of at least one cage deflecting roller (4.2) and/or grooves of at least one drive pulley or drive shaft (4.1) and/or grooves of at least one counterweight support roller (4.3).

14. Method according to any one of claims 11 to 12, wherein an assembly belt (30) is removed after the composite (120) has been completely laid in the lift shaft (1).

## Revendications

1. Installation d'ascenseur avec une cabine d'ascenseur (3), un entraînement (2) et un dispositif à courroie avec au moins une courroie (12), la courroie (12) comprenant un corps de courroie (20) dans lequel est disposé un dispositif à support de traction (21) et qui présente une première surface de contact (20.4) sur une première face de section transversale dans le sens de la hauteur de la courroie (12), et une seconde surface de contact (20.5) sur une seconde face de section transversale opposée à la première dans le sens de la hauteur de la courroie (12), **caractérisée en ce que** la première surface de contact (20.4) ne présente que deux nervures (20.6) et la seconde surface de contact (20.5) ne présente qu'une nervure (20.6).

2. Installation d'ascenseur selon la revendication 1, étant précisé que le corps de courroie (20) comprend une première partie de courroie (20.1) dans laquelle est disposé le dispositif à support de traction (21), et une seconde partie de courroie (20.2) qui est reliée solidement à ladite première partie dans une surface longitudinale (20.3).

3. Installation d'ascenseur selon la revendication 2, étant précisé que la seconde partie de courroie (20.2) présente une dureté plus faible, en particulier une dureté Shore plus faible que la première partie de courroie (20.1).

4. Installation d'ascenseur selon l'une des revendications 1 à 3, étant précisé que la première et/ou la seconde surface de contact présentent un revêtement (20.7) avec un coefficient de friction défini.

5. Installation d'ascenseur selon l'une des revendications précédentes, étant précisé qu'un rapport d'une largeur (w) maximale sur une hauteur (t) maximale de la courroie (12) est situé dans la plage de 0,8 à 1,0, de préférence dans la plage de 0,9 à 1,0, et est plus spécialement de l'ordre de 1,0.

6. Installation d'ascenseur selon l'une des revendications précédentes, étant précisé que le dispositif à courroie comprend plusieurs courroies (12) qui sont disposées côte à côte dans le sens de leur largeur et qui sont reliées par complémentarité de forme.

7. Courroie (12) pour une installation d'ascenseur selon l'une des revendications précédentes, étant précisé que la courroie (12) comprend un corps de courroie (20) dans lequel est disposé un dispositif à support de traction (21) et qui présente une première surface de contact (20.4) sur une première face de section transversale dans le sens de la hauteur de la courroie (12), et une seconde surface de contact (20.5) sur une seconde face de section transversale opposée à la première dans le sens de la hauteur de la courroie (12), **caractérisée en ce que** la première surface de contact (20.4) ne présente que deux nervures (20.6) et la seconde surface de contact (20.5) ne présente qu'une nervure (20.6).

8. Ensemble (120) de plusieurs courroies (12) selon la revendication 7, étant précisé que les courroies (12) sont reliées entre elles par une bande de montage (30).

9. Ensemble (120) selon la revendication 8, étant précisé que les courroies (12) sont au moins partiellement entourées par la bande de montage (30) et/ou la bande de montage (30) est reliée aux courroies (12) sur une seconde surface de contact (20.5).

10. Ensemble (120) selon la revendication 8 ou 9, étant précisé que les courroies (12) sont reliées à la bande de montage (30) avec des écartements de montage (30.1) les unes par rapport aux autres.

11. Procédé pour le montage d'un ensemble (120) selon l'une des revendications 8 à 10 dans une installation d'ascenseur, qui comprend les étapes suivantes :
a) pose de l'ensemble (120) sur des poulies de courroies (4.1, 4.2, 4.3) et
b) fixation des courroies (12.1, 12.2), aux extrémités de l'ensemble (120), avec des points fixes de courroies (10, 11).

12. Procédé selon la revendication 11, étant précisé que l'ensemble (120) est posé sur les poulies de courroies (4.1, 4.2, 4.3) selon les écartements de montage (30.1).

13. Procédé selon la revendication 11 ou 12, étant précisé que les courroies (12) de l'ensemble (120) sont posées dans les gorges d'au moins une poulie de déviation de cabine (4.2) et/ou dans les gorges d'au moins une poulie motrice ou d'un arbre moteur (4.1) et/ou dans les gorges d'au moins un rouleau porteur de contrepoids (4.3).

14. Procédé selon l'une des revendications 11 à 13, étant précisé qu'une bande de montage (30) est enlevée après que l'ensemble (120) a été complètement posé dans la gaine d'ascenseur (1).
